# FASCICULE DE BREVET EUROPEEN

(11) **EP 4 630 160 B1**
(45) Date de publication et mention de la délivrance du brevet: **04.11.2026**
(21) Numéro de dépôt: 23814494.3
(22) Date de dépôt: 30.11.2023
(51) Int. Cl.: B01J 29/72, B01D 53/94, C01B 39/48

(54) **CATALYSEUR COMPRENANT UNE ZÉOLITHE IZM-9 DE TYPE STRUCTURAL AFX DE TRÈS HAUTE PURETÉ ET AU MOINS UN MÉTAL DE TRANSITION POUR LA RÉDUCTION SÉLECTIVE DE NOX**
KATALYSATOR MIT EINEM ZEOLITH IZM-9 DER AFX-STRUKTUR SEHR HOHER REINHEIT UND MINDESTENS EINEM ÜBERGANGSMETALL ZUR SELEKTIVEN REDUKTION VON NOX
CATALYST COMPRISING AN AFX-STRUCTURE IZM-9 ZEOLITE OF VERY HIGH PURITY, AND AT LEAST ONE TRANSITION METAL FOR SELECTIVE REDUCTION OF NOX

(30) Priorité: 09.12.2022 FR 2213064
(43) Date de publication de la demande: 15.10.2025
(73) Titulaire: IFP Energies nouvelles, 92500 Rueil-Malmaison (FR)
(72) Inventeur: PRIGENT, Monique, 92852 RUEIL-MALMAISON CEDEX (FR); HARBUZARU, Bogdan, 92852 RUEIL-MALMAISON CEDEX (FR); BERTHOUT, David, 92852 RUEIL-MALMAISON CEDEX (FR); MARTINEZ FRANCO, Raquel, 92852 RUEIL-MALMAISON CEDEX (FR)
(74) Mandataire: IFP Energies nouvelles
(86) Numéro de dépôt international: PCT/EP2023/083822
(87) Numéro de publication internationale: WO 2024/120972

(56) Documents cités:
- FR-A1- 3 069 238
- FR-A1- 3 081 348

## Description

### DOMAINE TECHNIQUE

L'invention a pour objet un procédé de préparation d'un catalyseur à base d'une zéolithe IZM-9 de type structural AFX et d'au moins un métal de transition, le catalyseur préparé ou susceptible d'être préparé par le procédé, et son utilisation dans un procédé de réduction sélective catalytique des NOx en présence d'un réducteur, en particulier sur les moteurs à combustion interne.

### TECHNIQUE ANTÉRIEURE

Les émissions d'oxydes d'azote (NOx) qui résultent de la combustion de combustibles fossiles sont une préoccupation majeure pour la société. Des normes de plus en plus sévères sont mises en place par les instances gouvernementales afin de limiter l'impact des émissions issues de la combustion sur l'environnement et sur la santé. Pour les véhicules légers en Europe dans le cadre de la réglementation Euro 6c, les émissions de NOx et de particules doivent atteindre un niveau très bas pour l'ensemble des conditions de fonctionnement. Le nouveau cycle de conduite WLTC (Worldwide harmonized Light vehicles Test Cycle) et la réglementation des émissions en conduite réelle (RDE) associée aux facteurs de conformité, exige le développement d'un système de dépollution hautement efficaces pour atteindre ces objectifs. La réduction catalytique sélective, désignée par l'acronyme anglo-saxon « SCR » pour « Selective Catalytic Reduction », apparait comme une technologie efficace pour éliminer les oxydes d'azote dans les gaz d'échappement riches en oxygène, typiques des moteur Diesel et à allumage commandé en mélange pauvre. La réduction catalytique sélective est réalisée grâce à un réducteur, généralement l'ammoniac, et peut ainsi être désignée par NH₃-SCR. L'ammoniac (NH₃) impliqué dans le processus SCR est généralement généré via la décomposition d'une la solution aqueuse d'urée (AdBlue ou DEF), et produit N₂ et H₂O lors de la réaction avec NOx.

Les zéolithes échangées avec des métaux de transitions sont notamment utilisées comme catalyseurs pour les applications NH₃-SCR, dans les transports. Les zéolithes à petit pores, en particulier les chabazites échangées au cuivre, sont particulièrement adaptées. Elles existent commercialement sous la forme silicoaluminophosphate Cu-SAPO-34 et aluminosilicates Cu-SSZ-13 (ou Cu-SSZ-62). Leur tenue hydrothermale et leur efficacité de conversion des NOx en font les références actuelles. Cependant, les normes étant de plus en plus contraignantes, les performances des catalyseurs doivent encore être améliorées.

L'utilisation des zéolithes de type structural AFX pour les applications NH₃-SCR est connue, mais peu de travaux évaluent l'efficacité de catalyseurs mettant en œuvre cette zéolithe.

Fickel et al. (Fickel, D. W., & Lobo, R. F. (2009), The Journal of Physical Chemistry C, 114 (3), 1633-1640) ont étudié l'utilisation d'une SSZ-16 (type structural AFX) échangée au cuivre pour l'élimination des NOx. Cette zéolithe est synthétisée conformément au brevet US 5,194,235, dans lequel le cuivre est introduit par échange en utilisant du sulfate de cuivre(Il) à 80°C pendant 1h. Des résultats récents (Fickel, D. W., D'Addio, E., Lauterbach, J. A., & Lobo, R. F. (2011), 102(3), 441-448) montrent une excellente conversion et une bonne tenue hydrothermale pour un chargement à 3,78% poids en cuivre.

Des travaux sur la synthèse de zéolithes de type structural AFX ont été effectués avec différents agents structuraux (Lobo, R. F., Zones, S. I., & Medrud, R. C. (1996), Chemistry of materials, 8 (10), 2409-2411) ainsi que des travaux d'optimisation de la synthèse (Hrabanek, P., Zikanova, A., Supinkova, T., Drahokoupil, J., Fila, V., Lhotka, M., Bernauer, B. (2016), Microporous and Mesoporous Materials, 228, 107-115).

Wang et al. (Wang, D. et al., CrystEngComm., (2016, 18 (6), 1000-1008) ont étudié le remplacement de l'agent structurant TMHD par un mélange TEA-TMA pour la formation de SAPO-56 et obtiennent des phases non désirées SAPO-34 et SAPO-20. L'incorporation de métaux de transition n'est pas abordée.

La demande de brevet US 2016/0137518 décrit la synthèse d'une zéolithe AFX quasi-pure, en présence d'un agent structurant de type 1,3-Bis(1-adamantyl)imidazolium hydroxide, la préparation d'un catalyseur à base de la zéolithe AFX échangée avec un métal de transition et son utilisation pour des applications NH₃-SCR. Aucune forme particulière de zéolithe AFX n'est évoquée.

Plus récemment, la demande de brevet US 2018/0093259 présente la synthèse de zéolithes à petits pores, comme la zéolithe de type structural AFX, à partir d'une zéolithe de type FAU en présence d'un structurant, comme le 1,3-bis(1-adamantyl)imidazolium hydroxide et d'une source de métal alcalino-terreux. Elle présente également des applications de la zéolithe de type structural AFX obtenue, en particulier l'utilisation de cette zéolithe comme catalyseur pour la réduction de NOx, après échange avec un métal comme le fer. Parallèlement, la demande US 2016/0096169A1 présente l'utilisation dans la conversion des NOx, d'un catalyseur à base d'une zéolithe de type structural AFX ayant un rapport Si/Al compris entre 15 et 50 échangée avec un métal de transition, la zéolithe AFX étant obtenue avec l'utilisation d'un agent structurant de type 1,3-Bis(1-adamantyl)imidazolium hydroxide. Les résultats obtenus, dans la conversion des NOx, montrent en particulier une sélectivité des catalyseurs préparés selon les demandes de brevet US 2018/0093259 et US 2016/0096169 vers le protoxyde d'azote ne dépassant pas 20 ppm.

Le document JP2014-148441 décrit la synthèse d'un solide apparenté à une zéolithe AFX, en particulier d'une SAPO-56 comprenant du cuivre utilisable pour la réduction des NOₓ. Le solide est synthétisé, puis ajouté à un mélange comprenant un alcool et un sel de cuivre, le tout étant ensuite calciné. Le cuivre est donc ajouté après la formation du solide SAPO apparenté à la zéolithe de type structural AFX. Ce solide échangé semble présenter une stabilité accrue à la présence d'eau.

Ogura et al. (Bull. Chem. Soc. Jpn. 2018, 91, 355-361) montrent la très bonne activité d'une zéolithe de type SSZ-16 échangée au cuivre par rapport à d'autres structures zéolithiques et ce même après vieillissement hydrothermal.

La demande de brevet WO2017/080722 présente une synthèse directe d'une zéolithe comprenant du cuivre. Cette synthèse impose de partir d'une zéolithe de type structural FAU et d'utiliser un agent complexant TEPA et un élément M(OH)ₓ pour aboutir à différents types de zéolithes, principalement de type CHA. Des zéolithes de type ANA, ABW, PHI et GME sont également produites.

Les demandes de brevet WO2019/224081A1, WO2019/224082A1, WO2020/212354, WO2019/224086A1, WO2021/063704 décrivent des catalyseurs à base d'un matériau zéolithique aluminosilicique microporeux de type structural AFX et d'un métal de transition ainsi que l'utilisation de ce matériau pour la réduction sélective catalytique des NOx. FR3069238A1 divulgue un procédé de préparation d'un matériau zéolithique aluminosilicique microporeux de type structural AFX, ainsi que l'utilisation de ce matériau. FR3081348A1 divulgue un procédé de préparation d'un catalyseur à base d'une zéolithe de type structural AFX et d'au moins un métal de transition, ainsi que son utilisation pour la réduction sélective catalytique des NOx.

### RESUME DE L'INVENTION

La demanderesse a découvert qu'un catalyseur à base d'une zéolithe IZM-9 de type structural AFX préparé selon un mode de synthèse particulier mettant en oeuvre notamment un mélange de structurants organiques spécifiques, et d'au moins un métal de transition, en particulier du fer, du cérium ou du cuivre, présentait des performances intéressantes de conversion des NOₓ et de sélectivité vers N₂O. Les performances de conversion des NOx sont améliorées. En particulier, le catalyseur préparé selon l'invention permet d'obtenir des températures d'amorçage plus faibles que celles obtenues avec des catalyseurs de l'art antérieur, tels que les catalyseurs à base de zéolithe de type structural AFX synthétisée avec un seul structurant, échangée au cuivre, tout en conservant une bonne sélectivité vers le protoxyde d'azote N₂O. L'invention concerne un procédé de préparation d'un catalyseur à base de zéolithe IZM-9 de type structural AFX échangée avec au moins un métal de transition comprenant au moins les étapes suivantes :
i) le mélange en milieu aqueux, d'au moins une source de silicium (Si) sous forme oxyde SiO₂, d'au moins une source d'aluminium (AI) sous forme oxyde Al₂O₃, d'un composé organique azoté R1, et d'un deuxième composé organique azoté R2, d'au moins une source de sodium, le mélange réactionnel présentant la composition molaire suivante :
   - SiO₂/Al₂O₃: compris entre 6,00 et 200, de préférence entre 6,00 et 100
   - H₂O/SiO₂: compris entre 1,00 et 100, de préférence entre 5 et 60
   - R1/SiO₂: compris entre 0,01 à 0,60, de préférence entre 0,015 et 0,50
   - R2/SiO₂: compris entre 0,01 à 0,60, de préférence entre 0,05 et 0,50
   - Na₂O/SiO₂: compris entre 0,005 à 0,45, de préférence entre 0,05 et 0,25,

   R1 étant choisi parmi les composés organiques tétraéthylammonium ou tétrapropylammonium, de préférence R1 est le tétraéthylammonium et R2 étant choisi parmi les composés organiques 1,6-bis(méthylpiperidinium)hexane
   1,5-bis(méthylpiperidinium)pentane, ou 1,7-bis(méthylpiperidinium)heptane, de préférence R2 est le 1,6-bis(méthylpiperidinium)hexane, les composés organiques R1 et R2 étant introduits sous forme hydroxyde, jusqu'à l'obtention d'un gel précurseur homogène ;
ii) Le mûrissement du gel précurseur de ladite étape i) à une température comprise entre 20 et 40°C avec ou sans agitation, pendant une durée comprise entre 10 minutes et 72 heures, de préférence entre 5 heures et 48 heures et de manière préférée entre 18 et 24 heures ;
iii) L'addition de poudre de zéolithe de type structural FAU ayant un rapport SiO₂ (FAU)/Al₂O₃ (FAU) compris entre 5,2 et 75 au gel issu de l'étape ii), la quantité de silicium SiO₂ (FAU) apportée par ladite zéolithe FAU représentant entre 1 et 25%, de préférence entre 1,5 et 10% en poids de la quantité totale de SiO₂ dans le gel ;
iv) Le mûrissement du gel contenant la poudre de zéolithe FAU obtenu à l'étape iii) sous agitation à une température comprise entre 20 et 40°C pendant une durée de 1 heure à 12 heures, de préférence de 1 heure à 8 heures et de manière préférée de 1 heure à 3 heures, pour obtenir un gel précurseur homogène ;
v) traitement hydrothermal dudit gel précurseur homogène à une température comprise entre 110°C et 220°C pendant une durée comprise entre 5 heures et 10 jours, de préférence sous une pression de réaction autogène, jusqu'à ce que ladite zéolithe IZM-9 de type structural AFX se forme, ladite phase solide formée d'une zéolithe de type structural AFX étant filtrée, lavée puis séchée à la fin du traitement hydrothermal ;
vi) au moins un échange ionique comprenant la mise en contact dudit solide obtenu à l'issue de l'étape précédente, avec une solution comprenant au moins une espèce apte à libérer un métal de transition, en solution sous forme réactive sous agitation à température ambiante pendant une durée comprise entre 1 heure et 2 jours, ledit métal de transition libéré dans la solution d'échange de l'étape vi) étant sélectionné dans le groupe formé des éléments suivants : Ti, V, Mn, Mo, Fe, Co, Cu, Cr, Zn, Nb, Ce, Zr, Rh, Pd, Pt, Au, W, Ag, de préférence dans le groupe formé des éléments suivants: Fe, Cu, Nb, Ce ou Mn, de manière plus préférée parmi Fe, Ce ou Cu, seuls ou en mélange et de manière encore plus préférée ledit métal de transition est Cu ;
vii) traitement thermique par séchage du solide obtenu à l'issue de l'étape précédente à une température comprise entre 20 et 150°C suivi d'au moins une calcination sous flux d'air à une température comprise entre 400 et 700°C.

Les étapes vi) et vii) peuvent être interverties, et l'une d'elle ou les deux éventuellement répétées.

Le gel précurseur obtenu à l'issue de l'étape iii) peut présenter un rapport SiO₂/Al₂O₃ compris entre 20 et 80, de préférence entre 25 et 70.

On peut effectuer à l'étape vi) un échange ionique par mise en contact du solide obtenu à l'issue de l'étape v) avec un acide ou un composé tel que le chlorure, le sulfate ou le nitrate d'ammonium, avant l'échange ionique avec le ou les métaux de transition, pour obtenir la forme protonée de la zéolithe IZM-9.

La teneur en métal(aux) de transition introduite par l'étape d'échange ionique vi) peut être comprise entre 0,5 à 6% massique, de préférence entre 0,5 et 5% massique, de manière plus préférée entre 1 et 4% massique, par rapport à la masse totale du catalyseur final anhydre.

L'étape vi) de traitement thermique peut comprendre un séchage du solide à une température comprise entre 60 et 100°C pendant une durée comprise entre 2 et 24 heures, suivi d'au moins une calcination sous air, éventuellement sec, à une température comprise entre 450 et 700°C, de préférence entre 500 et 600°C, pendant une durée comprise entre 2 et 20 heures, de préférence entre 5 et 10 heures, de manière plus préférée entre 6 et 9 heures, le débit d'air éventuellement sec étant de manière préférée compris entre 0,5 et 1,5 L/h/g de solide à traiter, de manière plus préférée compris entre 0,7 et 1,2 L/h/g de solide à traiter.

L'invention concerne également un catalyseur à base de zéolithe IZM-9 de type structural AFX de rapport molaire SiO₂/Al₂O₃ tel que déterminé par fluorescence X compris entre 6 et 14, comprenant au moins un métal de transition, de préférence le fer, le cérium ou le cuivre, de manière très préférée le fer ou le cuivre, à une teneur comprise entre 0,5 et 6% massique par rapport à la masse totale du catalyseur sous sa forme anhydre, obtenu ou susceptible d'être obtenu par le procédé de préparation selon l'une quelconque des variantes décrites.

L'invention concerne également un procédé de réduction sélective de NOₓ dans un mélange gazeux par un réducteur tel que NH₃ ou H₂ par mise en contact dudit mélange gazeux avec ledit catalyseur.

Le catalyseur peut être mis en forme par dépôt sous forme de revêtement, sur une structure nid d'abeilles ou une structure à plaques.

La structure nid d'abeilles peut être formée de canaux parallèles ouverts aux deux extrémités ou peut comporter des parois poreuses filtrantes pour lesquelles les canaux parallèles adjacents sont alternativement bouchés de part et d'autre des canaux.

La quantité de catalyseur déposé sur ladite structure peut être comprise entre 50 à 180 g/L pour les structures filtrantes et entre 80 et 200 g/L pour les structures avec canaux ouverts.

Le catalyseur peut être associé à un liant tel que la cérine, l'oxyde de zirconium, l'alumine, la silice-alumine non zéolithique, l'oxyde de titane, un oxyde mixte de type cerine-zircone, un oxyde de tungstène et/ou une spinelle pour être mis en forme par dépôt sous forme de revêtement.

Ledit revêtement peut être associé à un autre revêtement présentant des capacités d'adsorption de NOx, de réduction des NOx ou favorisant l'oxydation de l'ammoniac.

Ledit catalyseur peut être sous forme d'extrudé, contenant jusqu'à 100% dudit catalyseur.

La structure revêtue par ledit catalyseur ou obtenue par extrusion dudit catalyseur peut être intégrée dans une ligne d'échappement d'un moteur à combustion interne.

### LISTE DES FIGURES

D'autres caractéristiques et avantages du procédé de préparation du catalyseur selon l'invention, apparaîtront à la lecture de la description ci-après d'exemples non limitatifs de réalisations, en se référant aux figures annexées et décrites ci-après.
La Figure 1 représente le diagramme de diffraction X de la zéolithe IZM-9 de type structural AFX obtenue selon l'exemple 2.
La Figure 2 représente le cliché au Microscope Electronique à Balayage (MEB) de la zéolithe IZM-9 obtenue selon l'exemple 2.
La Figure 3 représente la conversion C en % obtenue lors d'un test catalytique de réduction des oxydes d'azote (NOx) par l'ammoniac (NH₃) en présence d'oxygène (O₂) dans des conditions Standard SCR en fonction de la température T en °C pour les catalyseurs synthétisés suivant l'exemple 2 (CulZM-9, selon l'invention, courbe symbolisée par des ronds) et l'exemple 4 (CuAFX, comparatif, courbe symbolisée par des croix).
La Figure 4 représente la conversion C en % obtenue lors d'un test catalytique de réduction des oxydes d'azote (NOx) par l'ammoniac (NH₃) en présence d'oxygène (O₂) dans des conditions Standard SCR en fonction de la température T en °C pour les catalyseurs synthétisés suivant l'exemple 3 (FelZM-9, selon l'invention, courbe symbolisée par des ronds) et l'exemple 5 (FeAFX, comparatif, courbe symbolisée par des croix).

### DESCRIPTION DES MODES DE REALISATION

La présente invention concerne un procédé de préparation d'un catalyseur comprenant une zéolithe IZM-9 de type structural AFX et au moins un métal de transition, comprenant au moins les étapes suivantes :
i) mélange en milieu aqueux, d'au moins une source d'aluminium sous forme oxyde Al₂O₃, d'au moins une source de silicium sous forme oxyde SiO₂, d'un composé organique azoté R1, R1 étant choisi parmi le tétraéthylammonium ou le tétrapropylammonium, et d'un deuxième composé organique azoté R2, R2 étant choisi parmi le 1,5-bis(méthylpiperidinium)pentane, le 1,6-bis(méthylpiperidinium)hexane ou le 1,7-bis(méthylpiperidinium)heptane, d'au moins une source de sodium, le mélange réactionnel présentant la composition molaire suivante :
   - SiO₂/Al₂O₃: compris entre 6,00 et 200, de préférence entre 6,00 et 100
   - H₂O/SiO₂: compris entre 1,00 et 100, de préférence entre 5 et 60
   - R1/SiO₂: compris entre 0,01 à 0,60, de préférence entre 0,015 et 0,50
   - R2/SiO₂: compris entre 0,01 à 0,60, de préférence entre 0,05 et 0,50

   M_{2/n}O/SiO₂ compris entre 0,005 à 0,45, de préférence entre 0,05 et 0,25,
   dans laquelle, SiO₂ est la quantité molaire exprimée sous forme oxyde de SiO₂ apportée par la source de silicium, Al₂O₃ est la quantité molaire exprimée sous forme oxyde d'Al₂O₃ apportée par la source d'aluminium, H₂O est la quantité molaire d'eau présente dans le mélange réactionnel, R1 est la quantité molaire du première composé azoté, et R2 est la quantité molaire du deuxième composé azoté, , Na₂O est la quantité molaire de sodium exprimée sous forme oxyde de sodium,
   l'étape i) étant conduite pendant une durée comprise entre 5 et 20 minutes jusqu'à l'obtention d'un mélange homogène appelé gel précurseur ;
ii) Le mûrissement du gel précurseur de ladite étape i) à une température comprise entre 20 et 40°C, avec ou sans agitation, pendant une durée comprise entre 10 minutes et 72 heures, de préférence entre 5 heures et 48 heures et de manière préférée entre 18 et 24 heures ;
iii) L'addition de poudre de faujasite désaluminée au gel issu de l'étape ii) avec un rapport SiO₂ (FAU)/Al₂O₃ (FAU) compris entre 5,2 et 75, la quantité de silicium SiO₂(FAU) apportée par la poudre représentant entre 1 et 25% de préférence entre 1,5 et 10% en poids de la quantité totale de SiO₂ dans le gel ;
iv) Le mûrissement du gel contenant la poudre de zéolithe faujasite obtenu à l'étape iii) sous agitation à une température comprise entre 20 et 40°C pendant une durée de 1 heure à 12 heures, de préférence de 1 heure à 8 heures et de manière préférée de 1 heure à 3 heures,
v) Le traitement hydrothermal du mélange obtenu à l'issue de l'étape iv) à une température comprise entre 110°C et 220°C, de préférence entre 115°C et 170°C, pendant une durée comprise entre 5 heures et 10 jours, de préférence entre 16 heures et 7 jours et de manière plus préférée entre 16 heures et 5 jours pour obtenir une phase solide cristallisée, dite « solide » ;
vi) au moins un échange ionique comprenant la mise en contact dudit solide obtenu à l'issue de l'étape précédente, avec une solution comprenant au moins une espèce apte à libérer un métal de transition, en particulier le cuivre, en solution sous forme réactive sous agitation à température ambiante pendant une durée comprise entre 1 heure et 2 jours ; vii) traitement thermique par séchage du solide obtenu à l'issue de l'étape précédente à une température comprise entre 20 et 150°C suivi d'au moins une calcination sous flux d'air à une température comprise entre 400 et 700°C pendant une durée comprise entre 8 et 24 heures.

Les étapes vi) et vii) peuvent être interverties, et éventuellement répétées si besoin.

La présente invention concerne également le catalyseur comprenant une zéolithe IZM-9 de type structural AFX et au moins un métal de transition susceptible d'être obtenu ou directement obtenu par le procédé précédemment décrit.

L'invention concerne enfin l'utilisation d'un catalyseur selon l'invention pour la réduction sélective catalytique des NOx en présence d'un réducteur.

### Le catalyseur

Le catalyseur selon l'invention comprend au moins une zéolithe IZM-9 de type AFX de très haute pureté, et au moins un métal de transition additionnel, de préférence le cuivre.

Selon l'invention, le métal ou les métaux de transition compris dans le catalyseur est (sont) sélectionné(s) parmi les éléments issus du groupe formé par les éléments des groupes 3 à 12 du tableau périodique des éléments incluant les lanthanides.

En particulier, le métal ou les métaux de transition compris dans le catalyseur est (sont) sélectionné(s) dans le groupe formé des éléments suivants : Ti, V, Mn, Mo, Fe, Co, Cu, Cr, Zn, Nb, Ce, Zr, Rh, Pd, Pt, Au, W, Ag, de préférence dans le groupe formé des éléments suivants : Fe, Cu, Nb, Ce ou Mn, de manière plus préférée parmi Fe, Ce ou Cu seuls ou en mélange, et de manière encore plus préférée ledit métal de transition est Cu.

Pour les catalyseurs selon l'invention, la teneur en métal de transition se situe entre 0,5 et 6% massique, de préférence entre 0,5 et 5% massique, de manière plus préférée entre 1 et 4% par rapport à la masse totale du catalyseur final anhydre.

Le catalyseur selon l'invention peut également comprendre d'autres éléments, comme par exemple des métaux alcalins et/ou alcalino-terreux, par exemple le sodium, provenant notamment de la synthèse, en particulier des composés du milieu réactionnel de l'étape i) du procédé de préparation dudit catalyseur.

### Procédé de préparation du catalyseur

### Etape i) de mélange

L'étape i) met en oeuvre :
i) le mélange en milieu aqueux, d'au moins une source d'aluminium Al₂O₃, d'au moins une source de silicium SiO₂, d'un composé organique azoté R1, et d'un deuxième composé organique azoté R2, d'au moins une source de sodium, le mélange réactionnel présentant la composition molaire suivante :
   - SiO₂/Al₂O₃: compris entre 6,00 et 200, de préférence entre 6,00 et 100
   - H₂O/SiO₂: compris entre 1,00 et 100, de préférence entre 5 et 60
   - R1/SiO₂: compris entre 0,01 à 0,60, de préférence entre 0,015 et 0,50
   - R2/SiO₂: compris entre 0,01 à 0,60, de préférence entre 0,05 et 0,50
   - M_{2/n}O/SiO₂: compris entre 0,005 à 0,45, de préférence entre 0,05 et 0,25,

   Conformément à l'invention, R1 est choisi parmi les composés organiques tétraéthylammonium ou tétrapropylammonium, de préférence R1 est le tétraéthylammonium et R2 est choisi parmi les composés organiques
   1,6-bis(méthylpiperidinium)hexane 1,5-bis(méthylpiperidinium)pentane, ou
   1,7-bis(méthylpiperidinium)heptane, de préférence R2 est 1,6-bis(méthylpiperidinium)hexane, lesdits composés étant incorporées dans le mélange réactionnel pour la mise en œuvre de l'étape (i), comme structurants organiques, sous leur forme hydroxyde. L'anion associé aux cations ammoniums quaternaires présents dans l'espèce organique structurante pour la synthèse d'une zéolithe IZM-9 de type structural AFX selon l'invention est ainsi l'anion hydroxyde, ce qui permet d'orienter la synthèse vers une zéolithe de type structural AFX de très haute pureté.

Conformément à l'invention, la source de sodium est de préférence l'hydroxyde de sodium.

Conformément à l'invention, la source de silice SiO₂, peut être l'une quelconque desdites sources couramment utilisée pour la synthèse de zéolithes, par exemple de la silice en poudre, de l'acide silicique, de la silice colloïdale, de la silice dissoute ou du tétraéthoxysilane (TEOS). Parmi les silices en poudre, on peut utiliser les silices précipitées, notamment celles obtenues par précipitation à partir d'une solution de silicate de métal alcalin, des silices pyrogénées, par exemple du "CAB-O-SlL^{®}" et des gels de silice. On peut utiliser des silices colloïdales présentant différentes tailles de particules, par exemple de diamètre équivalent moyen compris entre 10 et 15 nm ou entre 40 et 50 nm, telles que celles commercialisées sous les marques déposées telles que "LUDOX^{®}". De manière préférée, la source de silicium est le Ludox AS-40.

Conformément à l'invention, la source d'aluminium Al₂O₄ est de préférence un sel d'aluminium, par exemple du chlorure, du nitrate, ou du sulfate, de l'hydroxyde d'aluminium, un alkoxyde d'aluminium, ou de l'alumine proprement dite, de préférence sous forme hydratée ou hydratable, comme de l'alumine colloïdale, de la pseudoboehmite, de l'alumine gamma ou du trihydrate alpha ou bêta. On peut également utiliser des mélanges des sources citées ci-dessus.

Conformément à l'invention, la poudre de zéolithe de type structural FAU de rapport SiO₂/Al₂O₃ compris entre 5,2 et 75, de préférence une zéolithe désaluminée de type structural FAU, qui est ajoutée au gel précurseur, joue le rôle de germes cristallins qui favorisent la formation de ladite zéolithe IZM-9 au détriment d'impuretés.

L'étape (i) du procédé selon l'invention consiste à préparer un mélange réactionnel aqueux contenant une source de SiO₂, au moins une source d'Al₂O₃, au moins un composé organique azoté R1, au moins un deuxième composé organique azoté R2, en présence d'au moins une source de sodium, pour obtenir un gel précurseur d'une zéolithe IZM-9 de type structural AFX. Les quantités desdits réactifs sont ajustées selon les proportions précédemment décrites de manière à conférer à ce gel une composition permettant la cristallisation d'une zéolithe IZM-9 de type structural AFX.

L'étape i) de mélange est mise en œuvre jusqu'à l'obtention d'un mélange homogène, de préférence pendant une durée supérieure ou égale à 15 minutes, de manière très préférée de l'ordre de 30 minutes, de préférence sous agitation par tout système connu de l'homme du métier à faible ou fort taux de cisaillement.

A l'issue de l'étape i) on obtient un gel précurseur homogène.

### Etape ii) de mûrissement

Le mûrissement du gel précurseur de ladite étape i) à une température comprise entre 20 et 40°C avec ou sans agitation, pendant une durée comprise entre 10 minutes et 72 heures, de préférence entre 5 heures et 48 heures et de manière préférée entre 18 et 24 heures.

### Etape iii) d'addition de poudre de faujasite

L'addition de poudre de faujasite désaluminée au gel issu de l'étape ii) avec un rapport SiO₂ (FAU)/Al₂O₃ (FAU) compris entre 5,2 et 75, la quantité de silicium SiO₂ (FAU) apportée par la poudre représentant entre 1 et 25%, de préférence entre1,5 et 10%, en poids de la quantité totale de SiO₂ dans le gel.

### Etape iv) de mûrissement

Le mûrissement du gel contenant la poudre de faujasite obtenu à l'étape iii) est réalisé, sous agitation, par exemple magnétique, à une température comprise entre 20 et 40°C pendant une durée de 1 heure à 12 heures, de préférence de 1 heure à 8 heures et de manière préférée de 1 heure à 3 heures.

A l'issue de l'étape iv) on obtient un gel précurseur homogène.

### Etape v) de traitement hydrothermal

Conformément à l'étape v) du procédé selon l'invention, le gel précurseur obtenu à l'issue de l'étape iv) est soumis à un traitement hydrothermal, à une température comprise entre 110°C et 220°C pendant une durée comprise entre 5 heures et 10 jours, jusqu'à ce que ladite zéolithe IZM-9 de type structural AFX (ou « solide cristallisé ») se forme.

Le gel précurseur peut avantageusement être mis sous conditions hydrothermales sous une pression de réaction autogène, éventuellement en ajoutant du gaz, par exemple de l'azote, à une température comprise entre 110°C et 220°C, de préférence entre 115°C et 170°C, jusqu'à la cristallisation complète d'une zéolithe de type structural AFX.

La durée nécessaire pour obtenir la cristallisation varie entre 5 heures et 10 jours, de préférence entre 16 heures et 7 jours, et de manière plus préférée entre 16 heures et 5 jours.

La mise en réaction s'effectue généralement sous agitation ou en absence d'agitation, de préférence sous agitation. Comme système d'agitation on peut utiliser tout système connu par l'homme de métier, par exemple, des pales inclinées avec des contrepales, des turbines d'agitation, des vis d'Archimède.

De manière très avantageuse, le procédé de l'invention conduit à la formation d'une zéolithe IZM-9 de type structural AFX, exempte de toute autre phase cristallisée ou amorphe. La pureté de la zéolithe IZM-9 obtenue est avantageusement supérieure ou égale à 95% poids, de préférence supérieure ou égale à 98% poids, de manière très préférée supérieure ou égale à 99% poids.

Le rapport molaire SiO₂/Al₂O₃ de la zéolithe IZM-9 de type structural AFX obtenue est avantageusement compris entre 6 et 14, de préférence entre 7 et 12.

### Etape vi) d'échange

Le procédé de préparation du catalyseur selon l'invention comprend au moins une étape d'échange ionique comprenant la mise en contact du solide cristallisé obtenu à l'issue de l'étape précédente (c'est-à-dire de la zéolithe IZM-9 de type structural AFX obtenue à l'issue de l'étape v) ou de la zéolithe IZM-9 séchée et calcinée obtenue à l'issue de l'étape vii) dans le cas préféré où les étapes v) et vii) sont interverties) avec au moins une solution comprenant au moins une espèce apte à libérer un métal de transition, de préférence le cuivre, en solution sous forme réactive, sous agitation à température ambiante pendant une durée comprise entre 1 heure et 2 jours, avantageusement pendant une durée comprise entre 0,5 jour et 1,5 jours, la concentration en ladite espèce apte à libérer le métal de transition dans ladite solution étant fonction de la quantité de métal de transition que l'on souhaite incorporer audit solide cristallisé.

Il est également avantageux d'obtenir la forme protonée de la zéolithe IZM-9 de type structural AFX après l'étape v). Ladite forme hydrogène peut être obtenue en effectuant un échange d'ions avec un acide, en particulier un acide minéral fort comme l'acide chlorhydrique, sulfurique ou nitrique, ou avec un composé tel que le chlorure, le sulfate ou le nitrate d'ammonium, avant l'échange ionique avec le ou les métaux de transition.

Le métal de transition libéré dans la solution d'échange est sélectionné dans le groupe formé des éléments suivants : Ti, V, Mn, Mo, Fe, Co, Cu, Cr, Zn, Nb, Ce, Zr, Rh, Pd, Pt, Au, W, Ag. De préférence, le métal de transition peut être Fe, Cu, Nb, Ce ou Mn, de manière plus préférée choisi parmi Fe, Ce ou Cu seuls ou en mélange, et de manière encore plus préférée ledit métal de transition est Cu.

Selon l'invention, par « espèce apte à libérer un métal de transition », on entend une espèce apte à se dissocier en milieu aqueux, comme par exemple les sulfates, les nitrates, les chlorures, les oxalates, les complexes organométalliques d'un métal de transition ou leurs mélanges. De préférence, l'espèce apte à libérer un métal de transition est un sulfate ou un nitrate dudit métal de transition.

Selon l'invention, la solution avec laquelle le solide cristallisé ou solide cristallisé séché et calciné est mis en contact, comprend au moins une espèce apte à libérer un métal de transition, de préférence une seule espèce apte à libérer un métal de transition, de préférence le fer ou cuivre ou le cérium, préférentiellement le cuivre.

Avantageusement, le procédé de préparation du catalyseur selon l'invention peut comprendre une étape vi) d'échanges ioniques par mise en contact du solide cristallisé avec une solution comprenant une espèce apte à libérer un métal de transition ou par mise en contact successive du solide avec plusieurs solutions comprenant chacune une espèce apte à libérer un métal de transition, les différentes solutions comprenant des espèces aptes à libérer un métal de transition différentes.

A la fin de l'échange, le solide obtenu peut avantageusement être filtré, lavé et ensuite séché pour obtenir ledit catalyseur sous forme de poudre.

La quantité totale de métal de transition, de préférence le fer, cuivre, ou cérium contenue dans ledit catalyseur final est comprise entre 0,5 et 6% massique par rapport à la masse totale du catalyseur sous sa forme anhydre.

Selon un mode de réalisation, le catalyseur selon l'invention peut être préparé par un procédé comprenant une étape vi) d'échange ionique, le solide ou le solide séché et calciné étant mis en contact avec une solution comprenant une espèce apte à libérer du cuivre en solution sous forme réactive. De manière avantageuse, la quantité de cuivre totale contenue dans ledit catalyseur final, c'est-à-dire à l'issue du procédé de préparation selon l'invention, peut être comprise entre 0,5 et 6% massique, de préférence entre 1 et 6% massique, tous les pourcentages étant des pourcentages massiques par rapport à la masse totale du catalyseur final selon l'invention sous sa forme anhydre, obtenu à l'issue du procédé de préparation.

### Etape vii) de traitement thermique

Le procédé de préparation selon l'invention comprend une étape vii) de traitement thermique réalisée à l'issue de l'étape v) de traitement hydrothermal et/ou à l'issue de l'étape vi) d'échange ionique. L'étape vi) du procédé de préparation peut avantageusement être intervertie avec l'étape vii). Chacune des deux étapes vi) et vii) peut également éventuellement être répétée.

Ladite étape vii) de traitement thermique comprend un séchage du solide à une température comprise entre 20 et 150°C, de préférence entre 60 et 100°C, avantageusement pendant une durée compris entre 2 et 24 heures, suivi d'au moins une calcination, sous air, éventuellement sec, à une température avantageusement comprise entre 450 et 700°C, de préférence entre 500 et 600°C pendant une durée comprise entre 2 et 20 heures, de préférence entre 5 et 10 heures, de manière plus préférée entre 6 et 9 heures, le débit d'air éventuellement sec étant de manière préférée compris entre 0,5 et 1,5 L/h/g de solide à traiter, de manière plus préférée compris entre 0,7 et 1,2 L/h/g de solide à traiter. La calcination peut être précédée d'une montée en température progressive.

Le catalyseur obtenu à l'issue de l'étape vii) de traitement thermique est dépourvu de toute espèce organique, en particulier dépourvu des deux structurants organiques R1 et R2.

En particulier, le catalyseur à base de zéolithe IZM-9 et d'au moins un métal de transition obtenu par un procédé comprenant au moins les étapes i), ii), iii), iv), v), vi) et vii) précédemment décrites présente des propriétés améliorées pour la conversion des NOₓ.

### Caractérisation du catalyseur préparé selon l'invention

Le catalyseur comprend une zéolithe IZM-9 de type structural AFX selon la classification de l'International Zeolite Association (IZA), échangée par au moins un métal de transition. Cette structure est caractérisée par diffraction aux rayons X (DRX).

Le diagramme de diffraction aux rayons X (DRX) est obtenu par analyse radiocristallographique au moyen d'un diffractomètre en utilisant la méthode classique des poudres avec le rayonnement Kα₁ du cuivre (λ = 1,5406Å). A partir de la position des pics de diffraction représentée par l'angle 2θ, on calcule, par la relation de Bragg, les équidistances réticulaires dₕₖₗ caractéristiques de l'échantillon. L'erreur de mesure Δ(dₕₖₗ) sur dₕₖₗ est calculée grâce à la relation de Bragg en fonction de l'erreur absolue Δ(2θ) affectée à la mesure de 2θ. Une erreur absolue Δ(2θ) égale à ± 0,02° est communément admise. L'intensité relative Iᵣₑₗ affectée à chaque valeur de dₕₖₗ est mesurée d'après la hauteur du pic de diffraction correspondant. La comparaison du diffractogramme avec les fiches de la base de données d'ICDD (International Centre for Diffraction Data) en utilisant un logiciel comme par exemple le DIFFRACT.SUITE nous permet aussi de faire l'identification des phases cristallines présentes dans le matériau obtenu.

Une zéolithe IZM-9 de type structural AFX pure est utilisée comme référence.

L'analyse qualitative et quantitative des espèces chimiques présentes dans les matériaux obtenus est faite par spectrométrie de fluorescence des rayons X (FX). Celle-ci est une technique d'analyse chimique utilisant une propriété physique de la matière, la fluorescence de rayons X. Le spectre des rayons X émis par la matière est caractéristique de la composition de l'échantillon, en analysant ce spectre, on peut en déduire la composition élémentaire, c'est-à-dire les concentrations massiques en éléments.

La perte au feu (PAF) du catalyseur obtenu après l'étape de séchage (et avant calcination) ou après l'étape de calcination de l'étape vii) du procédé selon l'invention est généralement comprise entre 4 et 15% poids. La perte au feu d'un échantillon, désignée sous l'acronyme PAF, correspond à la différence de masse de l'échantillon avant et après un traitement thermique à 1000°C pendant 2 heures. Elle est exprimée en % correspondant au pourcentage de perte de masse. La perte au feu correspond en général à la perte de solvant (comme l'eau) contenu dans le solide, mais aussi à l'élimination de composés organiques contenus dans les constituants solides minéraux.

De manière avantageuse, le catalyseur selon l'invention comprend une zéolithe IZM-9 de type structural AFX de pureté supérieure à 95%, de préférence supérieure à 98%, de manière encore plus préférée supérieure à 99% poids.

Le catalyseur selon l'invention présente avantageusement un rapport molaire SiO₂/Al₂O₃ tel que déterminé par fluorescence X compris entre 6 et 14.

### Utilisation du catalyseur selon l'invention

L'invention concerne également l'utilisation du catalyseur selon l'invention, directement préparé ou susceptible d'être préparé par le procédé décrit précédemment pour la réduction sélective de NOₓ dans un mélange gazeux contenant des NO_{X}, par exemple de type gaz d'échappement d'un moteur à combustion interne, par un réducteur tel que NH₃ ou H₂, avantageusement mis en forme par dépôt sous forme de revêtement (« washcoat » selon la terminologie anglo-saxonne) sur une structure nid d'abeilles principalement pour les applications mobiles ou une structure à plaques que l'on retrouve particulièrement pour les applications stationnaires.

La structure nid d'abeilles est formée de canaux parallèles ouverts aux deux extrémités (flow-through en anglais) ou comporte des parois poreuses filtrantes et dans ce cas les canaux parallèles adjacents sont alternativement bouchés de part et d'autre des canaux afin de forcer le flux de gaz à traverser la paroi (wall-flow monolith en anglais). Ladite structure nid d'abeilles ainsi revêtue constitue un pain catalytique. Ladite structure peut être composée de cordiérite, carbure de silicium (SiC), titanate d'aluminium (AlTi), alumine alpha, mullite ou tout autre matériau dont la porosité est comprise entre 30 et 70%. Ladite structure peut être réalisée en tôle métallique, en acier inoxydable contenant du Chrome et de l'aluminium, acier de type FeCrAl.

La quantité de catalyseur selon l'invention déposé sur ladite structure peut être comprise entre 50 à 180 g/L pour les structures filtrantes et entre 80 et 200 g/L pour les structures avec canaux ouverts.

Le revêtement proprement dit (« washcoat ») comprend le catalyseur selon l'invention, avantageusement associé à un liant tel que la cérine, l'oxyde de zirconium, l'alumine, la silice-alumine non zéolithique, l'oxyde de titane, un oxyde mixte de type cerine-zircone, un oxyde de tungstène, une spinelle. Ledit revêtement est avantageusement appliqué à ladite structure par une méthode de dépôt (washcoating en anglais) qui consiste à tremper le monolithe dans une suspension (slurry en anglais) de poudre de catalyseur selon l'invention dans un solvant, de préférence de l'eau, et potentiellement des liants, oxydes métalliques, stabilisateurs ou autres promoteurs. Cette étape de trempe peut être répétée jusqu'à atteindre la quantité souhaitée de revêtement. Dans certains cas le slurry peut aussi être pulvérisé au sein du monolithe. Le revêtement une fois déposé, le monolithe est calciné à une température de 300 à 600°C pendant 1 à 10 heures.

Ladite structure peut être revêtue d'un ou plusieurs revêtements. Le revêtement comprenant le catalyseur selon l'invention est avantageusement associé à, c'est-à-dire recouvre un ou est recouvert par, un autre revêtement présentant des capacités d'adsorption de polluants en particulier de NOx, de réduction de polluants en particulier des NOx ou favorisant l'oxydation de polluants, en particulier celle de l'ammoniac.

Une autre possibilité est de mettre le catalyseur sous forme d'extrudé. Dans ce cas, la structure obtenue peut contenir jusqu'à 100% de catalyseur selon l'invention.

Ladite structure revêtue par le catalyseur selon l'invention est avantageusement intégrée dans une ligne d'échappement d'un moteur à combustion interne fonctionnant principalement en mélange pauvre, c'est-à-dire en excès d'air par rapport à la stœchiométrie de la réaction de combustion comme c'est le cas pour les moteurs Diesel par exemple. Dans ces conditions de fonctionnement du moteur, les gaz d'échappement contiennent notamment les polluants suivants : des suies, des hydrocarbures imbrulés (HC), du monoxyde de carbone (CO), des oxydes d'azotes (NOx). En amont de ladite structure revêtue du catalyseur selon l'invention peut être placé un catalyseur d'oxydation dont la fonction est d'oxyder les HC et le CO ainsi qu'un filtre pour éliminer les suies des gaz d'échappement, la fonction de ladite structure revêtue étant d'éliminer le NOx, sa gamme de fonctionnement de se situant entre 100 et 900°C et de manière préférée entre 150°C et 500°C.

### AVANTAGES DE L'INVENTION

Le catalyseur selon l'invention, à base d'une zéolithe IZM-9 de type structural AFX et d'au moins un métal de transition, en particulier du cuivre, du fer ou du cérium, présente un gain notable en température d'amorçage (usuellement désigné par « light-off ») par rapport aux catalyseurs préparés à base d'une zéolithe de structure AFX synthétisée avec une seule molécule organique. En particulier, l'utilisation du catalyseur selon l'invention permet d'obtenir des températures d'amorçage plus faibles pour la réaction de conversion des NOx et une meilleure conversion des NOₓ sur l'ensemble de la gamme de température de fonctionnement (150°C - 500°C), tout en conservant une bonne sélectivité en N₂O.

### EXEMPLES

### Exemple 1: préparation du dihydroxyde de 1,6-bis(méthylpiperidinium)hexane (structurant R2).

50 g de 1,6-dibromohexane (0,20 mole, 99%, Alfa Aesar) sont ajoutés dans un ballon de 1 L contenant 50 g de N-méthylpipéridine (0,51 mole, 99%, Alfa Aesar) et 200 mL d'éthanol. Le milieu réactionnel est agité et porté à reflux pendant 5 heures. Le mélange est ensuite refroidi à température ambiante, puis filtré. Le mélange est versé dans 300 mL de diéthyléther froid, puis le précipité formé est filtré et lavé avec 100 mL de diéthyléther. Le solide obtenu est recristallisé dans un mélange éthanol/éther. Le solide obtenu est séché sous vide pendant 12 heures. On obtient 71 g d'un solide blanc (soit un rendement de 80%).
Le produit possède le spectre RMN ¹H attendu. RMN ¹H (D₂O, ppm/TMS) : 1,27
(4H,m) ; 1,48 (4H,m) ; 1,61 (4H,m) ; 1,70 (8H,m) ; 2,85 (6H,s) ; 3,16 (12H,m).

18,9 g d'Ag₂O (0,08 mole, 99%, Aldrich) sont ajoutés dans un bécher en téflon de 250 mL contenant 30 g du structurant dibromure de 1,6-bis(méthylpiperidinium)hexane (0,07 mole) préparé et 100 mL d'eau déionisée. Le milieu réactionnel est agité à l'abri de la lumière pendant 12 heures. Le mélange est ensuite filtré. Le filtrat obtenu est composé d'une solution aqueuse de dihydroxyde de 1,6-bis(méthylpiperidinium)hexane. Le dosage de cette espèce est réalisé par RMN du proton en utilisant l'acide formique en tant qu'étalon.

### Exemple 2: préparation d'une zéolithe IZM-9 de type structural AFX selon l'invention 3% Cu Préparation de la zéolithe IZM-9 de type structural AFX

46,75 g de TEAOH (35 % en poids, Sigma-Aldrich) ont été mélangés avec 442.31 g d'une solution aqueuse de dihydroxyde de 1,6-bis(méthylpiperidinium)hexane (MPC6) (21,85% en poids) préparé selon l'exemple 1. La préparation obtenue est maintenue sous agitation pendant 10 minutes. 23.92 g d'hydroxyde de sodium (98% en poids, Aldrich) sont ajoutés au mélange précédent et maintenu sous agitation pendant 15 minutes. 4.56 g d'aluminate de sodium (53 % en poids Al₂O₃, 42.32 % en poids Na₂O, Carlo Erba) sont ensuite ajoutés dans le milieu réactionnel et la préparation est maintenue sous agitation pendant 10 minutes. Par la suite, 229,34 g de Ludox^{®} AS-40 (gel de silice, Aldrich) goutte à goutte dans le bécher Le gel de synthèse présente à ce moment les rapports molaires suivants :

SiO₂/Al₂O₃ 65,55

- H₂O/SiO₂ 18,9
- TEAOH/SiO₂0,073
- MPC6OH/SiO₂ 0,2
- Na₂O/SiO₂ 0,22

La composition molaire du gel précurseur peut s'écrire sous la forme suivante : 1 SiO₂ : 0,015 Al₂O₃ : 0,073 TEAOH : 0,2 MPC6OH : 0,22 Na₂O : 18,9 H₂O

On laisse ensuite mûrir le gel sous agitation à une vitesse de 350 tr/min pendant 23 heures à température ambiante. Après cette période, 10 g de poudre de zéolithe Y (CBV 720, Zeolyst^{®}, SiO₂/Al₂O₃ = 32) soit une quantité de silicium SiO₂ (FAU) apportée par la poudre représentant 10% en poids de la quantité totale de SiO₂ dans le gel, sont introduits dans le mélange réactionnel. Celui-ci présente alors les rapports molaires suivants :
- SiO₂/Al₂O₃ 60
- H₂O/SiO₂ 17,4
- TEAOH/SiO₂ 0,067
- MPC6OH/SiO₂ 0,18
- Na₂O/SiO₂ 0,2

La composition molaire du gel précurseur peut alors s'écrire sous la forme suivante : 1 SiO₂ : 0,017 Al₂O₃ : 0,067 TEAOH : 0,18 MPC6OH : 0,2 Na₂O : 17,4 H₂O

Le mûrissement est poursuivi et le gel de synthèse contenant les germes est laissé sous agitation à une vitesse de 350 tr/min pendant 1 heure à température ambiante avant d'être transféré dans un réacteur en inox d'1 litre. Le réacteur est fermé, puis chauffé pendant 5 jours à 130°C sous pression autogène. Le produit solide cristallisé obtenu est filtré, lavé à l'eau déionisée, puis séché une nuit à 100°C. La PAF du solide séché est de 15%.

Le solide est ensuite introduit dans un four à moufle où est réalisée une étape de calcination: le cycle de calcination comprend une montée de 1,5°C/min en température jusqu'à 200°C, un palier à 200°C maintenu durant 2 heures, une montée de 1°C/min en température jusqu'à 550°C suivi d'un palier à 580°C maintenu durant 12 heures, puis un retour à la température ambiante.

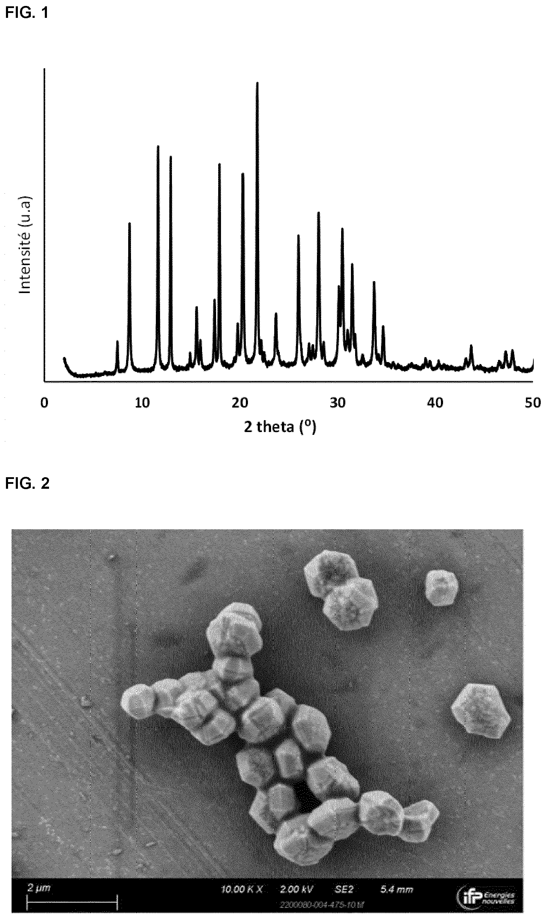

Le produit solide calciné a été analysé par diffraction de rayons X et identifié comme étant constitué d'une zéolithe de type structural AFX, avec une pureté supérieure à 99%. Le diagramme de diffraction effectué sur ce solide est donné sur la **Figure** 1. Le produit présente un rapport molaire SiO₂/Al₂O₃ de 9,66 tel que déterminé par fluorescence X. Un cliché de Microscope Électronique à Balayage (MEB) de la zéolithe IZM-9 est donné sur **la** **Figure 2****.**

### Echange ionique au Cu

La zéolithe IZM-9 calcinée est mise en contact avec une solution de [Cu(NH₃)₄](NO₃)₂ pendant 1 journée sous agitation à température ambiante. Le rapport entre le volume de solution de [Cu(NH₃)₄](NO₃)₂ et la masse de solide est de 30. Le solide final est séparé, lavé et séché 12 heures à 100°C.

Le solide échangé Cu-IZM-9 obtenu après la mise en contact avec la solution de Cu(NH₃)₄](NO₃)₂ est calciné sous flux d'air à 580°C durant 8 heures.

Le produit solide calciné est analysé par diffraction des rayons X et identifié comme une zéolithe de type structural AFX.

Le produit présente un rapport molaire SiO₂/Al₂O₃ de 9,7 et un pourcentage massique de Cu de 3% tel que déterminé par fluorescence X.

Le catalyseur obtenu est noté CulZM-9.

### Exemple 3 préparation d'une zéolithe IZM-9 de type structural AFX selon l'invention à 2,7 % Fe

### Préparation de la zéolithe IZM-9 de type structural AFX

46,75 g de TEAOH (35 % en poids, Sigma-Aldrich) ont été mélangés avec 442,31 g d'une solution aqueuse de dihydroxyde de 1,6-bis(méthylpiperidinium)hexane (MPC6) (21,85% en poids) préparé selon l'exemple 1. La préparation obtenue est maintenue sous agitation pendant 10 minutes. 23,92 g d'hydroxyde de sodium (98% en poids, Aldrich) sont ajoutés au mélange précédent et maintenu sous agitation pendant 15 minutes. 4,56 g d'aluminate de sodium (53 % en poids Al₂O₃, 42,32 % en poids Na₂O, Carlo erba) sont ensuite ajoutés dans le milieu réactionnel et la préparation est maintenue sous agitation pendant 10 minutes. Par la suite, 229,34 g de Ludox^{®} AS-40 (gel de silice, Aldrich) goutte à goutte dans le bécher. Le gel de synthèse présente à ce moment les rapports molaires suivants :
- SiO₂/Al₂O₃ 65,55
- H₂O/SiO₂ 18,9
- TEAOH/SiO₂ 0,073
- MPC6OH/SiO₂ 0,2
- Na₂O/SiO₂ 0,22

La composition molaire du gel précurseur peut s'écrire sous la forme suivante : 1 SiO₂ : 0,015 Al₂O₃ : 0,073 TEAOH : 0,2 MPC6OH : 0,22 Na₂O : 18,9 H₂O

On laisse ensuite mûrir le gel sous agitation à une vitesse de 350 tr/min pendant 23 heures à température ambiante. Après cette période, 10 g de poudre de zéolithe Y (CBV 720, Zeolyst^{®}, SiO₂Al₂O₃ = 32) soit une quantité de silicium SiO₂ (FAU) apportée par la poudre représentant 10% en poids de la quantité totale de SiO₂ dans le gel, sont introduits dans le mélange réactionnel. Celui-ci présente alors les rapports molaires suivants :
- SiO₂/Al₂O₃ 60
- H₂O/SiO₂ 17,4
- TEAOH/SiO₂ 0,067
- MPC6OH/SiO₂ 0,18
- Na₂O/SiO₂ 0,2

La composition molaire du gel précurseur peut alors s'écrire sous la forme suivante : 1 SiO₂ : 0,017 Al₂O₃ : 0,067 TEAOH : 0,18 MPC6OH : 0,2 Na₂O : 17,4 H₂O

Le mûrissement est poursuivi et le gel de synthèse contenant la poudre est laissé sous agitation à une vitesse de 350 tr/min pendant 1 heures à température ambiante avant d'être transféré dans un réacteur en inox d'1 litres. Le réacteur est fermé puis chauffé pendant 5 jours à 130°C sous pression autogène. Le produit solide cristallisé obtenu est filtré, lavé à l'eau déionisée puis séché une nuit à 100°C. La PAF du solide séché est de 15%.

Le solide est ensuite introduit dans un four à moufle où est réalisée une étape de calcination : le cycle de calcination comprend une montée de 1,5°C/min en température jusqu'à 200°C, un palier à 200°C maintenu durant 2 heures, une montée de 1°C/min en température jusqu'à 550°C suivi d'un palier à 580°C maintenu durant 12 heures, puis un retour à la température ambiante.

Le produit solide calciné a été analysé par diffraction de rayons X et identifié comme étant constitué d'une zéolithe de type structural AFX, avec une pureté supérieure à 99%. Le produit présente un rapport molaire SiO₂/Al₂O₃ de 9,66 tel que déterminé par fluorescence X.

### Echange ionique au Fe

La zéolithe IZM-9 calcinée sous forme protonée est mise en contact avec une solution de Fe(NO₃)₃ pendant 1 journée sous agitation à température ambiante. Le rapport entre le volume de solution de Fe(NO₃)₃ et la masse de solide est de 200. Le solide final est séparé, lavé et séché 12 heures à 100°C.

Le solide échangé FeIZM-9 obtenu après la mise en contact avec la solution de Fe(NO₃)₃ est calcinée sous flux d'air à 580°C durant 8 heures.

Le produit solide calciné est analysé par diffraction des rayons X et identifié comme une zéolithe de type structural AFX.

Le produit présente un pourcentage massique de Fe de 2,7 % tel que déterminé par fluorescence X.

Le catalyseur obtenu est noté FeIZM-9.

### Exemple 4 : Dans cet exemple, une zéolithe de type structural AFX échangée au Cu est synthétisée selon l'art antérieur. Dans cet exemple, la zéolithe a été préparée avec un seul structurant (R2)

### Préparation de la zéolithe de type structural AFX

95,04 g d'une zéolithe de type structural FAU (CBV712, SiO₂/Al₂O₃ = 11,47, Zeolyst, PAF = 12,81%) ont été mélangés avec 627,7 g d'une solution aqueuse de dihydroxyde de 1,6-bis(méthylpiperidinium)hexane (18,36% en poids) préparé selon l'exemple 1. Le mélange obtenu est maintenu sous agitation pendant 10 minutes. 12,08 g d'hydroxyde de sodium (98% en poids, Aldrich) et 27,7 g d'eau désionisée sont ajoutés dans le mélange de synthèse qui est maintenu sous agitation pendant 10 minutes. Par la suite, 37,7 g de Cab-O-Sil M5 fumé silice (100% en poids SiO₂, Cabot), sont incorporés dans le mélange de synthèse qui est maintenu sous agitation pendant une heure. Le gel précurseur obtenu a la composition molaire suivante: 1 SiO₂: 0,05 Al₂O₃: 0,20 R: 0,083 Na₂O: 17 H₂O, soit un ratio SiO₂/Al₂O₃ de 20. Le gel précurseur est ensuite transféré, après homogénéisation, dans un réacteur en inox de 160 mL doté d'un système d'agitation à quatre pales inclinées. Le réacteur est fermé puis chauffé pendant 10 heures à 170°C sous agitation à 250 - 300 tr/min. Le produit cristallisé obtenu est filtré, lavé à l'eau déionisée puis séché une nuit à 100°C.

Le solide est ensuite introduit dans un four à moufle où est réalisée une étape de calcination: le cycle de calcination comprend une montée de 1,5°C/min en température jusqu'à 200°C, un palier à 200°C maintenu durant 2 heures, une montée de 1°C/min en température jusqu'à 550°C suivi d'un palier à 550°C maintenu durant 12 heures puis un retour à la température ambiante.

Le produit solide calciné a été analysé par diffraction des rayons X et identifié comme étant constitué d'une zéolithe de type structural AFX, avec une pureté supérieure à 99%. Le produit présente un rapport molaire SiO₂/Al₂O₃ de 10,16 tel que déterminé par fluorescence X

### Echange ionique au Cu

La zéolithe de type AFX calcinée est mise au contact d'une solution de [Cu(NH₃)₄](NO₃)₂ pendant 1 journée sous agitation à température ambiante. Le solide final est séparé, lavé et séché et calciné sous flux d'air sec à 550°C durant 8 heures
L'analyse chimique par fluorescence des rayons X (FX) donné un rapport molaire SiO₂/Al₂O₃ de 10,2 et un pourcentage massique de Cu de 2,9%.

Le catalyseur obtenu est noté CuAFX.

### Exemple 5 : Dans cet exemple, une zéolithe de type structural AFX échangée au Fe est synthétisée selon l'art antérieur. Dans cet exemple, la zéolithe a été préparé avec un seul structurant (R2)

### Préparation de la zéolithe de type structural AFX

95,04 g d'une zéolithe de type structural FAU (CBV712, SiO₂/Al₂O₃ = 11,47, Zeolyst, PAF = 12,81%) ont été mélangés avec 627,7 g d'une solution aqueuse de dihydroxyde de 1,6-bis(méthylpiperidinium)hexane (18,36% en poids) préparé selon l'exemple 1. Le mélange obtenu est maintenu sous agitation pendant 10 minutes. 12,08 g d'hydroxyde de sodium (98% en poids, Aldrich) et 27,7 g d'eau désionisée sont ajoutés dans le mélange de synthèse et maintenu sous agitation pendant 10 minutes. Par la suite, 37,7 g de Cab-O-Sil M5 fumé silice (100% en poids SiO₂, Cabot), sont incorporés dans le mélange de synthèse qui est maintenu sous agitation pendant une heure. Le gel précurseur obtenu a la composition molaire suivante: 1 SiO₂: 0,05 Al₂O₃: 0,20 R: 0,083 Na₂O: 17 H₂O, soit un ratio SiO₂/Al₂O₃ de 20. Le gel précurseur est ensuite transféré, après homogénéisation, dans un réacteur en inox de 160 mL doté d'un système d'agitation à quatre pales inclinées. Le réacteur est fermé, puis chauffé pendant 10 heures à 170°C sous agitation à 250 - 300 tr/min. Le produit cristallisé obtenu est filtré, lavé à l'eau déionisée puis séché une nuit à 100°C.

Le solide est ensuite introduit dans un four à moufle où est réalisée une étape de calcination: le cycle de calcination comprend une montée de 1,5°C/min en température jusqu'à 200°C, un palier à 200°C maintenu durant 2 heures, une montée de 1°C/min en température jusqu'à 550°C suivie d'un palier à 550°C maintenu durant 12 heures puis un retour à la température ambiante.

Le produit solide calciné a été analysé par diffraction des rayons X et identifié comme étant constitué d'une zéolithe de type structural AFX, avec une pureté supérieure à 99%. Le produit présente un rapport molaire SiO₂/Al₂O₃ de 10,16 tel que déterminé par fluorescence X.

### Echange ionique au Fe

La zéolithe de type structural AFX calcinée sous forme protonée est mise en contact avec une solution de Fe(NO₃)₃ pendant 1 journée sous agitation à température ambiante. Le rapport entre le volume de solution de Fe(NO₃)₃ et la masse de solide est de 200. Le solide final est séparé, lavé et séché 12 heures à 100°C.

Le solide échangé FeAFX obtenu après la mise en contact avec la solution de Fe(NO₃)₃ est calcinée sous flux d'air à 580°C durant 8 heures.

Le produit solide calciné est analysé par diffraction des rayons X et identifié comme une zéolithe de type structural AFX.

Le produit présente un pourcentage massique de Fe de 3,1% tel que déterminé par fluorescence X.

Le catalyseur obtenu est noté FeAFX.

### Exemple 6 : Conversion des NOx en Standard SCR : comparaison des catalyseurs au cuivre selon l'invention avec l'art antérieur

Un test catalytique de réduction des oxydes d'azote (NOx) par l'ammoniac (NH₃) en présence d'oxygène (O₂) dans des conditions Standard SCR est réalisé à différentes températures de fonctionnement pour les catalyseurs synthétisés suivant l'exemple 2 (CuIZM-9), et l'exemple 4 (CuAFX).

Pour le test de chaque échantillon, 200 mg de catalyseur sous forme de poudre est disposé dans un réacteur en quartz. 145 L/h d'une charge représentative d'un mélange de gaz d'échappement d'un moteur Diesel sont alimentés dans le réacteur.

Cette charge présente la composition molaire suivante : 400 ppm NO, 400 ppm NH₃, 8,5% O₂, 9% CO₂, 10% H₂O, qpc N₂.

Un analyseur FTIR permet de mesurer la concentration des espèces NO, NO₂, NH₃, N₂O, CO, CO₂, H₂O, O₂ en sortie de réacteur. Les conversions de NOx calculées comme suivant :$Conversation = \left(NOx entrée-NOx sortie\right) / NOx entrée$

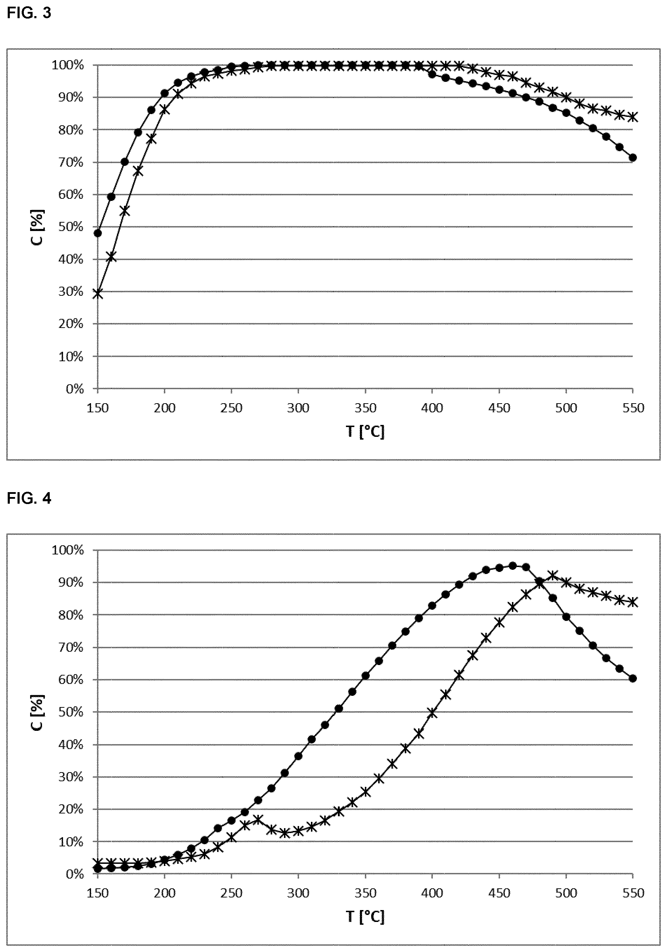

Les résultats de conversion de NOx sont présentés sur la figure 3, les courbes marquées par des ronds et des croix correspondant respectivement aux tests réalisés avec les catalyseurs synthétisés suivant l'exemple 2 selon l'invention (CulZM-9) et l'exemple 4 selon l'art antérieur (CuAFX). Le catalyseur selon l'invention offre une température d'amorçage optimisée et permet donc de convertir les NOx à plus basse température que le catalyseur synthétisé selon l'art antérieur.

Le catalyseur CulZM-9 synthétisé selon l'invention est particulièrement efficace sur les basses températures avec 70% de conversion des NOx à 170°C alors que le catalyseur CuAFX n'offre que 55% de conversion des NOx à cette même température.

Le catalyseur CulZM-9 propose une efficacité maintenue supérieure à 95% de 210 à 420°C.

Les températures d'amorçage des catalyseurs contenant 3% de cuivre sont données ci-dessous pour les conditions Standard-SCR :

**Table 1**

| | T50 | T80 | T90 | T100 |
|---|---|---|---|---|
| CuIZM-9 | 161°C | 181°C | 198°C | 260°C |
| CuAFX | 169°C | 194°C | 209°C | 270°C |

T50 correspond à la température à laquelle 50% des NOx du mélange gazeux sont convertis par le catalyseur. T80 correspond à la température à laquelle 80% des NOx du mélange gazeux sont convertis par le catalyseur. T90 correspond à la température à laquelle 90% des NOx du mélange gazeux sont convertis par le catalyseur. T100 correspond à la température à laquelle 100% des NOx du mélange gazeux sont convertis par le catalyseur.

Le catalyseur CulZM-9 synthétisé selon l'invention donne des performances supérieures au catalyseur CuAFX synthétisé selon l'art antérieur en termes de températures d'amorçage et de conversion de NOx sur les basses températures (T<300°C) en condition Standard SCR.

En effet, à même taux de conversion (50% ou 80%), les températures d'amorçage obtenues avec le catalyseur selon l'invention CuIZM-9 sont plus faibles par rapport à celles obtenues avec le catalyseur CuAFX.

Les émissions de protoxyde (N₂O) d'azote sont comparables pour les deux catalyseurs testés (<7ppm).

### Exemple 7 : Conversion des NOx en Standard-SCR - comparaison des catalyseurs au fer selon l'invention avec l'art antérieur

Un test catalytique de réduction des oxydes d'azote (NOx) par l'ammoniac (NH₃) en présence d'oxygène (O₂) dans les conditions Standard SCR est réalisé à différentes températures de fonctionnement pour le catalyseur synthétisé FeIZM-9 suivant l'invention (exemple 3) et l'échantillon FeAFX synthétisé selon l'art antérieur (exemple 5).

200 mg de catalyseur sous forme de poudre est disposé dans un réacteur en quartz. 218 L/h d'une charge représentative d'un mélange de gaz d'échappement d'un moteur Diesel sont alimentés dans le réacteur. Cette charge présente la composition molaire suivante : 400 ppm NO, 400 ppm NH₃, 8,5% O₂, 9% CO₂, 10% H₂O, qpc N₂.

Un analyseur FTIR permet de mesurer la concentration des espèces NO, NO₂, NH₃, N₂O, CO, CO₂, H₂O, O₂ en sortie de réacteur. Les conversions de NOx calculées comme suivant :$Conversation = \left(NOx entrée-NOx sortie\right) / NOx entrée$

Les résultats de conversion de NOx sont présentés sur la figure 4, les courbes marquées par des ronds et des croix correspondant respectivement aux tests réalisés avec les catalyseurs synthétisés suivant l'exemple 3 (FelZM-9) et l'exemple 5 (FeAFX).

Les températures d'amorçage des catalyseurs sont données ci-dessous pour les conditions Standard-SCR :

**Table 2**

| | T50 | T80 | T90 | T100 |
|---|---|---|---|---|
| FeIZM-9 | 328°C | 393°C | 422°C | - |
| FeAFX | 401°C | 455°C | 481°C | - |

T50 correspond à la température à laquelle 50% des NOx du mélange gazeux sont convertis par le catalyseur. T80 correspond à la température à laquelle 80% des NOx du mélange gazeux sont convertis par le catalyseur. T90 correspond à la température à laquelle 90% des NOx du mélange gazeux sont convertis par le catalyseur. T100 correspond à la température à laquelle 100% des NOx du mélange gazeux sont convertis par le catalyseur.

Le catalyseur FeIZM-9 synthétisé selon l'invention donne des performances supérieures au catalyseur FeAFX synthétisé selon l'art antérieur en termes de températures d'amorçage et de conversion de NOx sur les températures inférieures à 480°C en condition Standard SCR. En effet, à même taux de conversion (50% ou 80%), les températures d'amorçage obtenues avec le catalyseur selon l'invention FelZM-9 sont plus faibles par rapport à celles obtenues avec le catalyseur FeAFX.

Les émissions de protoxyde (N₂O) d'azote sont quasi-nulles pour les deux catalyseurs testés (<0,5 ppm).

## Revendications

1. Procédé de préparation d'un catalyseur à base de zéolithe IZM-9 de type structural AFX échangée avec au moins un métal de transition comprenant au moins les étapes suivantes :
i) le mélange en milieu aqueux, d'au moins une source de silicium (Si) sous forme oxyde SiO₂, d'au moins une source d'aluminium (Al) sous forme oxyde Al₂O₃, d'un composé organique azoté R1, et d'un deuxième composé organique azoté R2, d'au moins une source de sodium, le mélange réactionnel présentant la composition molaire suivante :
| | |
|---|---|
| SiO₂/Al₂O₃ | compris entre 6,00 et 200, de préférence entre 6,00 et 100 |
| H₂O/SiO₂ | compris entre 1,00 et 100, de préférence entre 5 et 60 |
| R1/SiO₂ | compris entre 0,01 à 0,60, de préférence entre 0,015 et 0,50 |
| R2/SiO₂ | compris entre 0,01 à 0,60, de préférence entre 0,05 et 0,50 |
| Na₂O/SiO₂ | compris entre 0,005 à 0,45, de préférence entre 0,05 et 0,25, |
R1 étant choisi parmi les composés organiques tétraéthylammonium ou tétrapropylammonium, de préférence R1 est le tétraéthylammonium et R2 étant choisi parmi les composés organiques 1,6-bis(méthylpiperidinium)hexane 1,5-bis(méthylpiperidinium)pentane, ou 1,7-bis(méthylpiperidinium)heptane, de préférence R2 est le 1,6-bis(méthylpiperidinium)hexane, les composés organiques R1 et R2 étant introduits sous forme hydroxyde ; jusqu'à l'obtention d'un gel précurseur homogène ;
ii) Le mûrissement du gel précurseur de ladite étape i) à une température comprise entre 20 et 40°C avec ou sans agitation, pendant une durée comprise entre 10 minutes et 72 heures, de préférence entre 5 heures et 48 heures, et de manière préférée entre 18 et 24 heures ;
iii) L'addition de poudre de zéolithe de type structural FAU ayant un rapport SiO₂ (FAU)/Al₂O₃ (FAU) compris entre 5,2 et 75 au gel issu de l'étape ii), la quantité de silicium SiO₂ (FAU) apportée par ladite zéolithe FAU représentant entre 1 et 25%, de préférence entre 1,5 et 10% en poids de la quantité totale de SiO₂ dans le gel ;
iv) Le mûrissement du gel contenant la poudre de zéolithe FAU obtenu à l'étape iii) sous agitation à une température comprise entre 20 et 40°C pendant une durée de 1 heure à 12 heures, de préférence de 1 heure à 8 heures et de manière préférée de 1 heure à 3 heures, pour obtenir un gel précurseur homogène ;
v) traitement hydrothermal dudit gel précurseur homogène à une température comprise entre 110°C et 220°C pendant une durée comprise entre 5 heures et 10 jours, de préférence sous une pression de réaction autogène, jusqu'à ce que ladite zéolithe IZM-9 de type structural AFX se forme, ladite phase solide formée d'une zéolithe de type structural AFX étant filtrée, lavée puis séchée à la fin du traitement hydrothermal ;
vi) au moins un échange ionique comprenant la mise en contact dudit solide obtenu à l'issue de l'étape précédente, avec une solution comprenant au moins une espèce apte à libérer un métal de transition, en solution sous forme réactive sous agitation à température ambiante pendant une durée comprise entre 1 heure et 2 jours, ledit métal de transition libéré dans la solution d'échange de l'étape vi) étant sélectionné dans le groupe formé des éléments suivants : Ti, V, Mn, Mo, Fe, Co, Cu, Cr, Zn, Nb, Ce, Zr, Rh, Pd, Pt, Au, W, Ag, de préférence dans le groupe formé des éléments suivants: Fe, Cu, Nb, Ce ou Mn, de manière plus préférée parmi Fe, Ce ou Cu, seuls ou en mélange, et de manière encore plus préférée ledit métal de transition est Cu ;
vii) traitement thermique par séchage du solide obtenu à l'issue de l'étape précédente à une température comprise entre 20 et 150°C suivi d'au moins une calcination sous flux d'air à une température comprise entre 400 et 700°C.

2. Procédé de préparation d'un catalyseur selon la revendication 1 dans lequel les étapes vi) et vii) sont interverties, et l'une d'elle ou les deux éventuellement répétée(s).

3. Procédé de préparation selon l'une des revendications 1 ou 2 dans lequel le gel précurseur obtenu à l'issue de l'étape iii) présente un rapport SiO₂/Al₂O₃ compris entre 20 et 80, de préférence entre 25 et 70.

4. Procédé de préparation selon l'une des revendications précédentes dans lequel on effectue à l'étape vi) un échange ionique par mise en contact du solide obtenu à l'issue de l'étape v) avec un acide ou un composé tel que le chlorure, le sulfate ou le nitrate d'ammonium, avant l'échange ionique avec le ou les métaux de transition, pour obtenir la forme protonée de la zéolithe IZM-9.

5. Procédé de préparation selon la revendication 4 dans lequel la teneur en métal(aux) de transition introduite par l'étape d'échange ionique vi) est avantageusement comprise entre 0,5 à 6% massique, de préférence entre 0,5 et 5% massique, de manière plus préférée entre 1 et 4% massique, par rapport à la masse totale du catalyseur final anhydre.

6. Procédé de préparation selon l'une des revendications précédentes dans lequel l'étape vi) de traitement thermique comprend un séchage du solide à une température comprise entre 60 et 100°C pendant une durée comprise entre 2 et 24 heures, suivi d'au moins une calcination sous air, éventuellement sec, à une température comprise entre 450 et 700°C, de préférence entre 500 et 600°C, pendant une durée comprise entre 2 et 20 heures, de préférence entre 5 et 10 heures, de manière plus préférée entre 6 et 9 heures, le débit d'air éventuellement sec étant de manière préférée compris entre 0,5 et 1,5 L/h/g de solide à traiter, de manière plus préférée compris entre 0,7 et 1,2 L/h/g de solide à traiter.

7. Catalyseur à base de zéolithe IZM-9 de type structural AFX de rapport molaire SiO₂/Al₂O₃ tel que déterminé par fluorescence X compris entre 6 et 14, comprenant au moins un métal de transition, de préférence le fer, le cérium ou le cuivre, de manière très préférée le fer ou le cuivre, à une teneur comprise entre 0,5 et 6% massique par rapport à la masse totale du catalyseur sous sa forme anhydre, obtenu ou susceptible d'être obtenu par le procédé de préparation selon l'une des revendications 1 à 6.

8. Procédé de réduction sélective de NOₓ dans un mélange gazeux par un réducteur tel que NH₃ ou H₂ par mise en contact dudit mélange gazeux avec un catalyseur selon la revendication 7.

9. Procédé de réduction sélective de NOx selon la revendication 8 dans lequel le catalyseur est mis en forme par dépôt sous forme de revêtement, sur une structure nid d'abeilles ou une structure à plaques.

10. Procédé de réduction sélective de NOx selon la revendication 9, pour laquelle la structure nid d'abeilles est formée de canaux parallèles ouverts aux deux extrémités ou comporte des parois poreuses filtrantes pour lesquelles les canaux parallèles adjacents sont alternativement bouchés de part et d'autre des canaux.

11. Procédé de réduction sélective de NOx selon la revendication 10, pour laquelle la quantité de catalyseur déposé sur ladite structure est comprise entre 50 à 180 g/L pour les structures filtrantes et entre 80 et 200 g/L pour les structures avec canaux ouverts.

12. Procédé de réduction sélective de NOx selon l'une des revendications 8 à 11, pour laquelle le catalyseur est associé à un liant tel que la cérine, l'oxyde de zirconium, l'alumine, la silice-alumine non zéolithique, l'oxyde de titane, un oxyde mixte de type cerine-zircone, un oxyde de tungstène et/ou une spinelle pour être mis en forme par dépôt sous forme de revêtement.

13. Procédé de réduction sélective de NOx selon l'une des revendications 9 à 12, pour laquelle ledit revêtement est associé à un autre revêtement présentant des capacités d'adsorption de NOx, de réduction des NOx ou favorisant l'oxydation de l'ammoniac.

14. Procédé de réduction sélective de NOx selon la revendication 8, pour laquelle ledit catalyseur est sous forme d'extrudé, contenant jusqu'à 100% dudit catalyseur.

15. Procédé de réduction sélective de NOx selon l'une des revendications 8 à 14, pour laquelle la structure revêtue par ledit catalyseur ou obtenue par extrusion dudit catalyseur est intégrée dans une ligne d'échappement d'un moteur à combustion interne.

## Patentansprüche

1. Verfahren zur Herstellung eines Katalysators auf Basis eines Zeolithen IZM-9 vom Strukturtyp AFX, der mit mindestens einem Übergangsmetall ausgetauscht ist, umfassend mindestens die folgenden Schritte:
i) Mischen in wässrigem Medium mindestens einer Siliciumquelle (Si) in Form von Oxid SiO₂, mindestens einer Aluminiumquelle (Al) in Form von Oxid Al₂O₃, einer organischen Stickstoffverbindung R1 und einer zweiten organischen Stickstoffverbindung R2, mindestens einer Natriumquelle, wobei das Reaktionsgemisch die folgende molare Zusammensetzung aufweist:
SiO₂/Al₂O₃ zwischen 6,00 und 200, vorzugsweise zwischen 6,00 und 100
H₂O/SiO₂ zwischen 1,00 und 100, vorzugsweise zwischen 5 und 60
R1/SiO₂ zwischen 0,01 und 0,60, vorzugsweise zwischen 0,015 und 0,50
R2/SiO₂ zwischen 0,01 und 0,60, vorzugsweise zwischen 0,05 und 0,50
Na₂O/SiO₂ zwischen 0,005 und 0,45, vorzugsweise zwischen 0,05 und 0,25,
wobei R1 ausgewählt ist aus den organischen Tetraethylammonium- oder Tetrapropylammonium-Verbindungen, R1 vorzugsweise Tetraethylammonium ist, und wobei R2 ausgewählt ist aus den organischen 1,6-Bis(methylpiperidinium)hexan-, 1,5-Bis(methylpiperidinium)pentan- oder 1,7-Bis(methylpiperidinium)heptan-Verbindungen, R2 vorzugsweise 1,6-Bis(methylpiperidinium)hexan ist, wobei die organischen Verbindungen R1 und R2 in Hydroxidform eingebracht werden; bis zum Erhalten eines homogenen Vorläufergels;
ii) Reifung des Vorläufergels des Schritts i) bei einer Temperatur zwischen 20 und 40 °C mit oder ohne Rühren während einer Dauer zwischen 10 Minuten und 72 Stunden, vorzugsweise zwischen 5 Stunden und 48 Stunden, und bevorzugt zwischen 18 und 24 Stunden;
iii) Zugabe von Zeolithpulver vom Strukturtyp FAU mit einem Verhältnis SiO₂ (FAU)/Al₂O₃ (FAU) zwischen 5,2 und 75 zu dem Gel aus Schritt ii), wobei die von dem Zeolithen FAU bereitgestellte Menge von Silicium SiO₂ (FAU) zwischen 1 und 25 Gew.-%, vorzugsweise zwischen 1,5 und 10 Gew.-%, der Gesamtmenge von SiO₂ in dem Gel ausmacht;
iv) Reifung des im Schritt iii) erhaltenen Gels, welches das Zeolithpulver FAU enthält, unter Rühren bei einer Temperatur zwischen 20 und 40 °C während einer Dauer von 1 Stunde bis 12 Stunden, vorzugsweise von 1 Stunde bis 8 Stunden und bevorzugt von 1 Stunde bis 3 Stunden, um ein homogenes Vorläufergel zu erhalten;
v) hydrothermale Behandlung des homogenen Vorläufergels bei einer Temperatur zwischen 110 °C und 220 °C während einer Dauer zwischen 5 Stunden und 10 Tagen, vorzugsweise unter einem autogenen Reaktionsdruck, bis sich der Zeolith IZM-9 vom Strukturtyp AFX bildet, wobei die aus einem Zeolithen vom Strukturtyp AFX gebildete feste Phase am Ende der hydrothermalen Behandlung filtriert, gewaschen und dann getrocknet wird;
vi) mindestens einen Ionenaustausch, der das Inkontaktbringen des am Ende des vorhergehenden Schritts erhaltenen Feststoffs mit einer Lösung, die mindestens eine Spezies umfasst, die ein Übergangsmetall in Lösung in reaktiver Form freisetzen kann, unter Rühren bei Umgebungstemperatur während einer Dauer zwischen 1 Stunde und 2 Tagen umfasst, wobei das in der Austauschlösung des Schritts vi) freigesetzte Übergangsmetall aus der aus den folgenden Elementen gebildeten Gruppe ausgewählt ist: Ti, V, Mn, Mo, Fe, Co, Cu, Cr, Zn, Nb, Ce, Zr, Rh, Pd, Pt, Au, W, Ag, vorzugsweise aus der aus den folgenden Elementen gebildeten Gruppe: Fe, Cu, Nb, Ce oder Mn, noch bevorzugter aus Fe, Ce oder Cu, allein oder gemischt, und das Übergangsmetall noch stärker bevorzugt Cu ist;
vii) Wärmebehandlung durch Trocknen des am Ende des vorhergehenden Schritts erhaltenen Feststoffs bei einer Temperatur zwischen 20 und 150 °C, gefolgt von mindestens einer Kalzinierung unter Luftstrom bei einer Temperatur zwischen 400 und 700 °C.

2. Verfahren zur Herstellung eines Katalysators nach Anspruch 1, wobei die Schritte vi) und vii) vertauscht sind und einer von ihnen oder beide gegebenenfalls wiederholt wird(werden).

3. Verfahren zur Herstellung nach einem der Ansprüche 1 oder 2, wobei das am Ende des Schritts iii) erhaltene Vorläufergel ein Verhältnis SiO₂/Al₂O₃ zwischen 20 und 80, vorzugsweise zwischen 25 und 70 aufweist.

4. Verfahren zur Herstellung nach einem der vorhergehenden Ansprüche, wobei im Schritt vi) ein Ionenaustausch durch Inkontaktbringen des am Ende des Schritts v) erhaltenen Feststoffs mit einer Säure oder einer Verbindung wie Ammoniumchlorid, -sulfat oder - nitrat vor dem Ionenaustausch mit dem oder den Übergangsmetallen durchgeführt wird, um die protonierte Form des Zeolithen IZM-9 zu erhalten.

5. Verfahren zur Herstellung nach Anspruch 4, wobei der Gehalt an Übergangsmetall(en), der durch den Ionenaustauschschritt vi) eingebracht wird, vorteilhafterweise zwischen 0,5 und 6 Massen-%, vorzugsweise zwischen 0,5 und 5 Massen-%, noch bevorzugter zwischen 1 und 4 Massen-%, bezogen auf die Gesamtmasse des wasserfreien fertigen Katalysators, liegt.

6. Verfahren zur Herstellung nach einem der vorhergehenden Ansprüche, wobei der Wärmebehandlungsschritt vi) eine Trocknung des Feststoffs bei einer Temperatur zwischen 60 und 100 °C während einer Dauer zwischen 2 und 24 Stunden, gefolgt von mindestens einer Kalzinierung unter Luft, gegebenenfalls trockener Luft, bei einer Temperatur zwischen 450 und 700 °C, vorzugsweise zwischen 500 und 600 °C, während einer Dauer zwischen 2 und 20 Stunden, vorzugsweise zwischen 5 und 10 Stunden, noch bevorzugter zwischen 6 und 9 Stunden, umfasst, wobei der Volumenstrom der gegebenenfalls trockenen Luft vorzugsweise zwischen 0,5 und 1,5 L/h/g des zu behandelnden Feststoffs, noch bevorzugter zwischen 0,7 und 1,2 L/h/g des zu behandelnden Feststoffs liegt.

7. Katalysator auf Basis eines Zeolithen IZM-9 vom Strukturtyp AFX mit einem durch Röntgenfluoreszenz bestimmten molaren Verhältnis SiO₂/Al₂O₃ zwischen 6 und 14, umfassend mindestens ein Übergangsmetall, vorzugsweise Eisen, Cer oder Kupfer, besonders bevorzugt Eisen oder Kupfer, mit einem Gehalt zwischen 0,5 und 6 Massen-%, bezogen auf die Gesamtmasse des Katalysators in seiner wasserfreien Form, der durch das Herstellungsverfahren nach einem der Ansprüche 1 bis 6 erhalten wird oder erhalten werden kann.

8. Verfahren zur selektiven Reduktion von NOₓ in einem gasförmigen Gemisch durch ein Reduktionsmittel wie NH₃ oder H₂ durch Inkontaktbringen des gasförmigen Gemisches mit einem Katalysator nach Anspruch 7.

9. Verfahren zur selektiven Reduktion von NOx nach Anspruch 8, wobei der Katalysator durch Abscheiden in Form einer Beschichtung auf einer Wabenstruktur oder einer Plattenstruktur geformt wird.

10. Verfahren zur selektiven Reduktion von NOx nach Anspruch 9, wobei die Wabenstruktur aus an beiden Enden offenen parallelen Kanälen gebildet wird oder poröse filtrierende Wände aufweist, bei denen die benachbarten parallelen Kanäle auf beiden Seiten der Kanäle abwechselnd verschlossen sind.

11. Verfahren zur selektiven Reduktion von NOx nach Anspruch 10, wobei die Menge des auf der Struktur abgeschiedenen Katalysators zwischen 50 und 180 g/L bei den filtrierenden Strukturen und zwischen 80 und 200 g/L bei den Strukturen mit offenen Kanälen liegt.

12. Verfahren zur selektiven Reduktion von NOx nach einem der Ansprüche 8 bis 11, wobei der Katalysator zum Formen durch Abscheiden in Form einer Beschichtung mit einem Bindemittel wie Ceroxid, Zirkoniumoxid, Aluminiumoxid, nichtzeolithischem Siliciumdioxid-Aluminiumoxid, Titanoxid, einem Ceroxid-Zirconiumoxid-Mischoxid, einem Wolframoxid und/oder einem Spinell kombiniert wird.

13. Verfahren zur selektiven Reduktion von NOx nach einem der Ansprüche 9 bis 12, wobei die Beschichtung mit einer weiteren Beschichtung kombiniert wird, die Fähigkeiten zur Adsorption von NOx, zur Reduktion der NOx aufweist oder die Oxidation von Ammoniak fördert.

14. Verfahren zur selektiven Reduktion von NOx nach Anspruch 8, wobei der Katalysator in Form eines Extrudats, das bis zu 100 % des Katalysators enthält, vorliegt.

15. Verfahren zur selektiven Reduktion von NOx nach einem der Ansprüche 8 bis 14, wobei die mit dem Katalysator beschichtete oder durch Extrusion des Katalysators erhaltene Struktur in eine Abgasleitung einer Brennkraftmaschine integriert ist.

## Claims

1. Process for the preparation of a catalyst based on IZM-9 zeolite of AFX structural type exchanged with at least one transition metal, comprising at least the following stages:
i) the mixing, in aqueous medium, of at least one source of silicon (Si) in SiO₂ oxide form, of at least one source of aluminium (Al) in Al₂O₃ oxide form, of a nitrogenous organic compound R1, of a second nitrogenous organic compound R2 and of at least one source of sodium, the reaction mixture exhibiting the following molar composition:
| | |
|---|---|
| SiO₂/Al₂O₃ | of between 6.00 and 200, preferably between 6.00 and 100 |
| H₂O/SiO₂ | of between 1.00 and 100, preferably between 5 and 60 |
| R1/SiO₂ | of between 0.01 and 0.60, preferably between 0.015 and 0.50, |
| R2/SiO₂ | of between 0.01 and 0.60, preferably between 0.05 and 0.50, |
| Na₂O/SiO₂ | of between 0.005 and 0.45, preferably between 0.05 and 0.25, |
R1 being chosen from tetraethylammonium or tetrapropylammonium organic compounds; preferably, R1 is tetraethylammonium; and R2 being chosen from 1,6-bis(methylpiperidinium)hexane,
1,5-bis(methylpiperidinium)pentane or 1,7-bis(methylpiperidinium)heptane organic compounds; preferably, R2 is 1,6-bis(methylpiperidinium)hexane; the organic compounds R1 and R2 being introduced in hydroxide form; until a homogeneous precursor gel is obtained;
ii) the maturing of the precursor gel of said stage i) at a temperature of between 20°C and 40°C, with or without stirring, for a period of time of between 10 minutes and 72 hours, preferably between 5 hours and 48 hours and in a preferred way between 18 and 24 hours;
iii) the addition, in powdered form, of zeolite of FAU structural type having a SiO₂ (FAU)/Al₂O₃ (FAU) ratio of between 5.2 and 75 to the gel resulting from stage ii), the amount of SiO₂ (FAU) silicon contributed by said FAU zeolite representing between 1% and 25%, preferably between 1.5% and 10%, by weight of the total amount of SiO₂ in the gel;
iv) the maturing of the gel containing the FAU zeolite powder obtained in stage iii) with stirring at a temperature of between 20°C and 40°C for a period of time of 1 hour to 12 hours, preferably of 1 hour to 8 hours and in a preferred way of 1 hour to 3 hours, in order to obtain a homogeneous precursor gel;
v) hydrothermal treatment of said homogeneous precursor gel at a temperature of between 110°C and 220°C for a period of time of between 5 hours and 10 days, preferably under an autogenous reaction pressure, until said IZM-9 zeolite of AFX structural type is formed, said solid phase formed of a zeolite of AFX structural type being filtered off, washed and then dried at the end of the hydrothermal treatment;
vi)at least one ion exchange comprising bringing said solid obtained on conclusion of the preceding stage into contact with a solution comprising at least one entity capable of releasing a transition metal, in solution in reactive form, with stirring at ambient temperature for a period of time of between 1 hour and 2 days, said transition metal released in the exchange solution of stage vi) being selected from the group formed of the following elements: Ti, V, Mn, Mo, Fe, Co, Cu, Cr, Zn, Nb, Ce, Zr, Rh, Pd, Pt, Au, W and Ag, preferably from the group formed of the following elements: Fe, Cu, Nb, Ce and Mn, more preferably from Fe, Ce or Cu, alone or as a mixture, and more preferably still said transition metal is Cu;
iv) heat treatment by drying the solid obtained at the end of the previous step at a temperature of between 20 and 150°C, followed by at least one calcination under a stream of air at a temperature of between 400 and 700°C.

2. Process for the preparation of a catalyst according to Claim 1, in which stages vi) and vii) are reversed, and one of them or both optionally repeated.

3. Preparation process according to either of Claims 1 and 2, in which the precursor gel obtained on conclusion of stage iii) exhibits a SiO₂/Al₂O₃ ratio of between 20 and 80, preferably between 25 and 70.

4. Preparation process according to one of the preceding claims, in which an ion exchange is carried out in stage vi) by bringing the solid obtained on conclusion of stage v) into contact with an acid or a compound such as ammonium chloride, sulfate or nitrate, before the ion exchange with the transition metal(s), in order to obtain the protonated form of the IZM-9 zeolite.

5. Preparation process according to Claim 4, in which the content of transition metal(s) introduced by the ion exchange stage vi) is advantageously of between 0.5% and 6% by weight, preferably between 0.5% and 5% by weight, more preferably between 1% and 4% by weight, with respect to the total weight of the final anhydrous catalyst.

6. Preparation process according to one of the preceding claims, in which the heat treatment stage vi) comprises a drying of the solid at a temperature of between 60°C and 100°C for a period of time of between 2 and 24 hours, followed by at least one calcination under air, which is optionally dry, at a temperature of between 450°C and 700°C, preferably between 500°C and 600°C, for a period of time of between 2 and 20 hours, preferably between 5 and 10 hours, more preferably between 6 and 9 hours, the flow rate of optionally dry air being preferably of between 0.5 and 1.5 l/h/g of solid to be treated, more preferably of between 0.7 and 1.2 l/h/g of solid to be treated.

7. Catalyst based on IZM-9 zeolite of AFX structural type with a SiO₂/Al₂O₃ molar ratio, as determined by X-ray fluorescence, of between 6 and 14, comprising at least one transition metal, preferably iron, cerium or copper, very preferably iron or copper, at a content of between 0.5% and 6% by weight, with respect to the total weight of the catalyst in its anhydrous form, obtained or capable of being obtained by the preparation process according to one of Claims 1 to 6.

8. Process for the selective reduction of NOx in a gas mixture by a reducing agent, such as NH₃ or H₂, by bringing said gas mixture into contact with a catalyst according to Claim 7.

9. Process for the selective reduction of NOx according to Claim 8, in which the catalyst is formed by deposition in the form of a coating on a honeycomb structure or a plate structure.

10. Process for the selective reduction of NOx according to Claim 9, in which the honeycomb structure is formed of parallel channels which are open at both ends or comprises porous filtering walls for which adjacent parallel channels are alternately blocked on either side of the channels.

11. Process for the selective reduction of NOx according to Claim 10, in which the amount of catalyst deposited on said structure is of between 50 and 180 g/l for the filtering structures and between 80 and 200 g/l for the structures with open channels.

12. Process for the selective reduction of NOx according to one of Claims 8 to 11, for which the catalyst is combined with a binder, such as ceria, zirconium oxide, alumina, non-zeolitic silica-alumina, titanium oxide, a mixed oxide of ceria-zirconia type, a tungsten oxide and/or a spinel, in order to be formed by deposition in the form of a coating.

13. Process for the selective reduction of NOx according to one of Claims 9 to 12, for which said coating is combined with another coating exhibiting NOx adsorption or NOx reduction capabilities or promoting the oxidation of ammonia.

14. Process for the selective reduction of NOx according to Claim 8, in which said catalyst is in the form of an extrudate, containing up to 100% of said catalyst.

15. Process for the selective reduction of NOx according to one of Claims 8 to 14, for which the structure coated with said catalyst or obtained by extrusion of said catalyst is incorporated in an exhaust line of an internal combustion engine.
